Europäisches Patentamt

European Patent Office

Office européen des brevets

(11) Veröffentlichungsnummer: **0 545 063 A1**

(12) **EUROPÄISCHE PATENTANMELDUNG**

(21) Anmeldenummer: **92118242.4**

(22) Anmeldetag: **24.10.92**

(51) Int. Cl.5: **F16D  66/02**

(30) Priorität: **30.11.91 DE 4139546**

(43) Veröffentlichungstag der Anmeldung:
**09.06.93 Patentblatt  93/23**

(84) Benannte Vertragsstaaten:
**DE FR GB IT**

(71) Anmelder: **ROBERT BOSCH GMBH
Postfach 30 02 20
W-7000 Stuttgart 30(DE)**

(72) Erfinder: **Stumpe, Werner, Dipl.-Ing.
Ferdinand Hanauer Strasse 62
W-7000 Stuttgart 50(DE)**
Erfinder: **Wrede, Jürgen, Dipl.-Ing.
Seeschwalbenweg 1
W-7000 Stuttgart 50(DE)**

(54) **System zum Erkennen des Verschleisses eines Bremsbelags.**

(57) Es wird ein System zum Erkennen des Verschleißes des Belags einer Reibbelagbremse beschrieben, dessen Sensor aus wenigstens zwei parallel liegenden stromdurchflossenen Widerständen besteht, die bei fortschreitendem Belagverschleiß zeitlich nacheinander unwirksam werden. Eine Auswerteschaltung wertet die Widerstandsänderung aus.

Bei der Erfindung weisen die Widerstände zusätzlich eine starke Abhängigkeit des Wertes ihres Widerstands von der Temperatur auf und die Auswerteschaltung erkennt die Widerstandsänderungen mit unterschiedlichen Ursachen und wertet sie aus.

Fig. 1

EP 0 545 063 A1

## Stand der Technik

Ein System zum Erkennen des Verschleißes des Belags einer Reibbelagbremse mit den Merkmalen des Oberbegriffs des Anspruchs 1 ist bekannt.

## Kern und Vorteile der Erfindung

Der Kern der Erfindung besteht in der Verwendung von stark temperaturabhängigem Widerstandsmaterial für den Belagdickensensor mit mehreren parallel geschalteten Widerständen und in der zusätzlichen Auswertung des Sensorsignals, z.B. des Stroms J oder des Spannungsabfalls U als Temperatursignal.

Die Balagdickeninformation wird durch zwei Möglichkeiten, die gleichzeitig oder alternativ angewandt werden können, erfaßt, nämlich
- durch Erkennen eines plötzlichen steilen Anstiegs/Abfalls im Signal ("Sprung") beim Durchtrennen einer Drahtschleife durch die Elektronik aus dem Signalverlauf (Signaländerung durch Temperatur ist dagegen träge!),
- und/oder Erkennen eines Offsets $\Delta U$ im Signal zwischen zwei Zuständen, bei

denen die Bremse Umgebungstemperatur hat.

Ob die Bremse Umgebungstemperatur hat, kann aufgrund von anderen Sensorsignalen und konstruktionsbedingten Konstanten festgestellt werden. Ist die Umgebungstemperatur zwischen zwei solchen Zeitpunkten unterschiedlich, kann dies durch die Information über die Umgebungstemperatur korrigiert werden.

Die Erfindung hat die Vorteile,
- daß mit einem einzigen, 2-poligen Sensor die Bremsentemperatur und die Belagdicke erfaßt werden kann,
- daß der Mehraufwand im Sensor geringfügig ist,
- daß die Gewinnung der unterschiedlichen Informationen durch intelligente Auswertung möglich ist.

Dafür wird überwiegend nur Softwareaufwand, evtl. ein zusätzlicher Speicher, eine permanente Stromversorgung und ein Thermometer im Steuergerät benötigt.

## Figurenbeschreibung

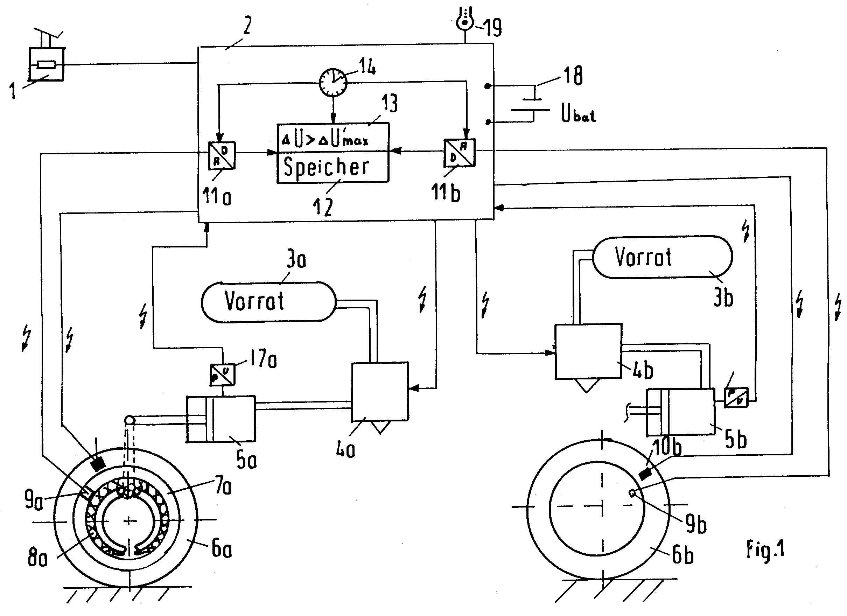

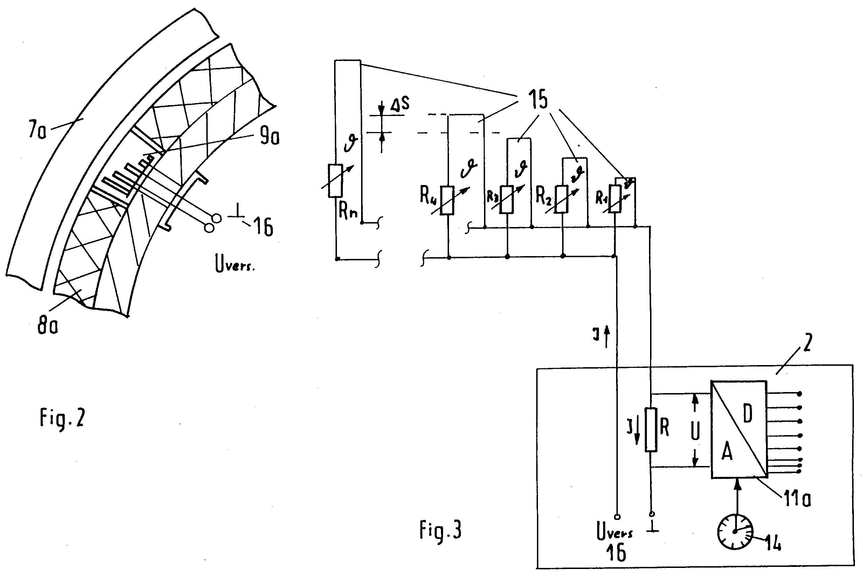

In Fig. 1 ist ein Nutzfahrzeug mit elektronisch regelbarer Druckluftbremsanlage (ELB) mit einem elektrischen Bremswertgeber 1, einem Steuergerät 2, Vorratsbehältern 3a, b, elektrischen Drucksteuerventilen 4a, b, Bremszylindern 5a, b (jeweils nur 1 Rad einer Achse gezeichnet) gezeigt. Weiter zeigt Fig. 1 Räder 6a, b, Bremstrommeln 7a, b, Bremsbacken 8a, b sowie Drehzahlfühler für ein ABS 10a, b, kombinierte Belagdicken- und Temperatursensoren (BTS) 9a, b sowie Drucksensoren 17a und b. Der BTS ist im Prinzip aufgebaut wie der bereits bekannte Sensor zur Messung des Belagverschleißes. Mehrere (viele Stufen ergeben höhere Auflösung) parallel geschaltete Widerstände $R_1$ bis $R_n$ - (sh. Fig. 2 und 3), deren Verbindungsleitungen als abgestufte Drahtschleifen 15 ausgeführt sind , sind in den Geber eingebettet. Der Geber 9a ist in Fig. 2 statt eines Niets zur Befestigung des Bremsbelags 8a an der Backe eingebaut. Beim Bremsen wird durch den Verschleiß des Belags nacheinander eine Drahtschleife nach der anderen durchgeschliffen, wodurch sich der Gesamtwiderstand der Parallelschaltung

$$\frac{1}{R_{ges}} = \frac{1}{R_1} + \frac{1}{R_2} + \frac{1}{R_3} + \ldots + \frac{1}{R_n}$$

ändert.

Falls $R_1 = R_2 = R_3 = \ldots = R_n$ ist, gilt:

$$R_{ges} = \frac{R_n}{n}$$

Diese Widerstandsänderung führt bei konstanter Versorgungsspannung $U_{Vers}$ zu einem anderen Strom J in einem Meßwiderstand R, über dem in der Elektronik 2 eine ebenfalls veränderte Spannung U abgegriffen wird. Diese Spannung U wird in festen Zeitintervallen $\Delta t$ (Timer 14) abgetastet und im A/D-Wandler 11a, digitalisiert.

Der Widerstandswert $R_{ges}$ der Parallelschaltung ändert sich nun nicht nur durch Durchschleifen der Drahtschleifen, sondern auch durch die Temperatur im Belag. Dieser Effekt wurde bis jetzt als unerwünscht angesehen. Durch entsprechende Materialwahl wurde versucht, den Widerstand möglichst temperaturunabhängig zu gestalten. Vorliegende Erfindung geht genau in die entgegengesetzte Richtung:

Für die Widerstände $R_1$ bis $R_n$ wird ein Werkstoff verwendet, der einen hohen Temperaturkoeffizienten aufweist. Dadurch wird die Anordnung quasi zu einem Temperaturfühler. Die Unterscheidung zwischen Temperatur- und Belagdickenmessung erfolgt allein durch die intelligente Auswertung des Signals U auf der 2-poligen Leitung.

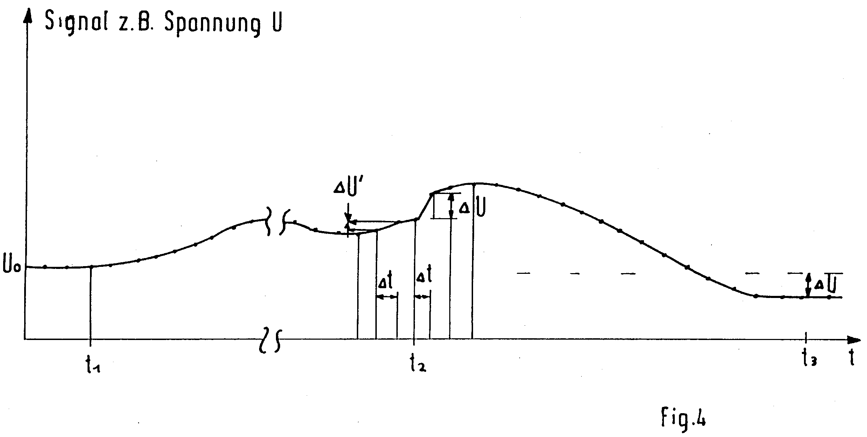

Einen beispielhaften Verlauf des Signals U zeigt Fig. 4.

Bei einem neuen Bremsbelag und kalten Bremsen, (d.h. bei Umgebungstemperatur) liefert der BTS 9 das Signal $U_o$ (Fig. 4); alle Teilwiderstände

$R_1$, $R_2$, $R_3$ bis $R_n$ tragen zu $R_{ges}$ bei. Wird nun zum Zeitpunktk $t_1$ die Bremse betätigt, so nimmt aufgrund der Reibungswärme die Temperatur im Belag und somit auch im BTS 9 zu. Dadurch sinkt beispielsweise der temperaturabhängige Widerstand von $R_1$ bis $R_n$, also auch von $R_{ges}$. Damit wächst bei $U_{Vers}$ = const. und Widerstand R im Steuergerät = const. der Strom J und folglich der Spannungsabfall U = R · J. Die Veränderung von U erfolgt aufgrund der Temperaturänderung relativ langsam und kontinuierlich, der Gradient ist zum Beispiel $\Delta U'/\Delta t$.

Da U ~ $\delta$ (= Temperatur am Geber BTS) ~ Bremstemperatur (~ bedeutet proportional) ist, wirkt der BTS 9 wie ein bekannter Temperatursensor für die Bremsentemperatur. Z.B. kann bei Überschreiten eines Grenzwertes der Fahrer durch eine Anzeige (Lampe, Hupe) vor Überhitzung der Bremsen gewarnt werden.

Über den Bremswertgeber 1 ist im Steuergerät 2 bekannt, ob gebremst wird; die Bremsdruckinformationen liefern die Drucksensoren 17a, b und über die Radsensoren 10a, b oder anderweitig kann die Information gewonnen werden, ob das Fahrzeug steht oder fährt.

Steht das Fahrzeug z.B. seit einer Zeit T, die von der

$$\text{Bremsleistung} = \int \text{Bremsdruck} \cdot \text{Raddrehzahl} \cdot \text{Konstante} \cdot dt$$

bei der letzten Bremsung abhängig ist und aufgrund der Sensorsignale und vorher eingespeicherter konstanter Werte berechnet wird, so kann davon ausgegangen werden, daß die Bremsen Umgebungstemperatur haben. Die Umgebungstemperatur kann durch einen Außentemperaturfühler 19 im Steuergerät 2 bekannt sein. Auf diese Weise können alle Temperaturfühler 9 auf die Umgebungstemperatur abgeglichen werden. Um nach dem Abschalten des Fahrtschalters die Stromversorgung des Steuergeräts 2 und der Sensoren 9 zu ermöglichen, kann eine permanente, kleine Hilfsbatterie 18 vorgesehen werden.

Ist nun nach wiederholten Bremsungen zum Zeitpunkt $T_2$ (Fig. 4) die Belagdicke so stark reduziert, daß die erste Drahtschleife des Widerstands $R_n$ durchtrennt wird, so ändert sich der Widerstand $R_{ges}$ schlagartig um z.B.

$$\Delta R_{ges} = \left| \frac{R_n}{n} - \frac{R_n}{n-1} \right| \cdot$$

Dies bewirkt einen steilen Anstieg des Signals U. Die Änderung $\Delta U$ ist größer als der durch

Temperaturänderung in $\Delta t$ mögliche Sprung... $\Delta U'_{max}$, der aus Versuchen ermittelt und dann abgespeichert wird. Auch beim Wiederabkühlen der Bremse auf Umgebungstemperatur bleibt ein $\Delta U$ übrig, welches der Widerstandsänderung durch Wegfall von $R_n$ entspricht. Durch Abspeichern des letzten oder mehrerer vorheriger Werte von U bei auf Umgebungstemperatur abgekühlten Bremsen im Speicher 12 kann die Elektronik den Unterschied $\Delta U$ erkennen. Auf diese Weise, nämlich dem schlagartigen Anstieg $\Delta U$ und/oder den bleibenden Offset $\Delta U$ nach Abkühlung, kann die Belagdickeninformation ausgewertet werden.

Aufgrund der Belagdickeninformation können nun bei Unterschieden z.B. an Vorder- und Hinterachse die Bremsdrücke durch ELB so korrigiert werden, daß sich die Belagdicken wieder angleichen und so die Bremsbeläge gleichmäßig verschleißen.

Da die Regelung der Bremsdruckverteilung mit dem Ziel gleichmäßiges Belagverschleißen an allen Achsen sehr langsam abläuft, reicht es aus, die Veränderung der Belagdicke mit zeitlicher Verzögerung, also z.B. nach der Zeit T nach Stillstand des Fahrzeugs zu erfassen.

Der Spannungsabfall U hängt neben $R_{ges}$ auch von $U_{Vers}$ und R ab. $U_{Vers}$ kann im Steuergerät 2 ermittelt und so als Störfaktor eliminiert werden. Für den Widerstand R kann z.B. ein Widerstandsmaterial gewählt werden, welches im Umgebungstemperaturbereich von -40°C bis +30°C seinen spezifischen Widerstand nicht oder ausreichend wenig verändert.

Sobald erkannt wird, daß eine oder mehrere (m) Drahtschleifen im Geber durch Verschleiß durchtrennt sind, ist der neue Gesamtwiderstand

$$R_{ges} = \frac{R_n}{n-m}$$

(bei gleich großen Teilwiderständen) dem Steuergerät 2 bekannt.

Die Auswertung des Signals U zur Temperaturbestimmung wird entsprechend angepaßt.

**Patentansprüche**

1. System zum Erkennen des Verschleißes des Belags einer Reibbelagbremse, enthaltend einen in den Belag eingebetteten Sensor, der aus wenigstens zwei parallel liegenden stromdurchflossenen Widerständen besteht, die bei fortschreitendem Belagverschleiß zeitlich nacheinander unwirksam werden und enthaltend eine Auswerteelektronik, die die Änderung des wirksamen Widerstands auswertet und eine Anzeige bewirkt und/oder einen Steuereingriff auslöst, dadurch gekennzeichnet, daß die parallel geschalteten Widerstände eine starke Abhängigkeit des Werts ihres Widerstands von der Temperatur aufweisen und daß die Auswerteelektronik derart ausgelegt ist, daß sie Änderungen des Stroms aufgrund der Widerstandsänderungen mit unterschiedlicher Ursache erkennt und unterschiedliche Signale zur Anzeige und/oder für einen Steuereingriff erzeugt.

Fig.1

EP 0 545 063 A1

Fig. 2

$U_{vers.}$

7a

9a

16

8a

Fig. 3

15

$\Delta S$

$R_n$

$R_4$

$R_3$

$R_2$

$R_1$

$\vartheta$

2

$J$

$J$

R

U

D

A

11a

$U_{vers}$

16

14

Fig.4

EP 0 545 063 A1

## EINSCHLÄGIGE DOKUMENTE

EP 92118242.4

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| X | EP - A - 0 189 083 (WABCO WESTINGHOUSE GMBH) * Anspruch 1 * -- | 1 | F 16 D 66/02 |
| A | US - A - 4 658 936 (MOSELEY) * Zusammenfassung * -- | 1 | |
| A | EP - A - 0 347 654 (MANNESMANN KIENZLE GMBH) * Fig. 2 * -- | 1 | |
| A | DE - A - 3 319 988 (MATSUSHITA ELECTRIC IND. CO) * Gesamt * -- | 1 | |
| A | DE - A - 3 813 494 (BAYERISCHE MOTOREN WERKE AG) * Ansprüche 1-6 * -- | 1 | |
| A | DE - A - 2 356 242 (WESTFÄLISCHE METALL IND. KG) * Gesamt * -- | 1 | **RECHERCHIERTE SACHGEBIETE (Int. Cl⁵)** |
| A | DE - A - 2 450 761 (SANDER) * Fig. 3,4 * -- | 1 | F 16 D 66/00 |
| A | FR - A - 2 107 232 (THE BENDIX CORPORATION) * Ansprüche 1-7 * -- | 1 | |
| A | DE - C - 3 915 996 (LEOPOLD KOSTAL GMBH & CO KG) * Gesamt * ---- | 1 | |

Der vorliegende Recherchenbericht wurde für alle Patentansprüche erstellt.

| Recherchenort | Abschlußdatum der Recherche | Prüfer |
|---|---|---|
| WIEN | 26-11-1992 | KAMMERER |